# FASCICULE DE BREVET EUROPEEN

(11) **EP 3 952 631 B1**
(45) Date de publication et mention de la délivrance du brevet: **01.03.2023**
(21) Numéro de dépôt: 20717070.5
(22) Date de dépôt: 09.04.2020
(51) Int. Cl.: A01G 7/06

(54) **APPAREIL D' INJECTION SOUS L' ECORCE D' UNE PLANTE**
VORRICHTUNG ZUM EINSPRITZEN UNTER DIE RINDE EINER PFLANZE
DEVICE FOR INJECTING UNDER THE BARK OF A PLANT

(30) Priorité: 09.04.2019 FR 1903762
(43) Date de publication de la demande: 16.02.2022
(73) Titulaire: CETEV, 31460 Le Faget (FR)
(72) Inventeur: STEUPERAERT, Jan, 31000 Toulouse (FR); BEUSTE, Philippe, 31130 Balma (FR); RENIER, Adeline, 31450 Pompertuzat (FR)
(74) Mandataire: Barbot, Willy
(86) Numéro de dépôt international: PCT/EP2020/060258
(87) Numéro de publication internationale: WO 2020/208189

(56) Documents cités:
- EP-A1- 1 205 103
- EP-A1- 3 189 724
- FR-A1- 3 052 634

## Description

### Domaine de l'invention

La présente invention concerne un appareil pour injection (micro-injection) sous-corticale d'une substance, de préférence d'une substance phytosanitaire, dans une plante.

### Art antérieur

Dans le domaine du traitement des plantes, par exemple pour répondre à une infestation par des insectes, à une infection bactérienne ou fongique, à une carence en éléments nutritifs ou pour corriger des problèmes de croissance, il est connu d'administrer une substance de type insecticide, antibiotique, antifongique, nutriment, ou encore régulateur de croissance.

Une telle administration peut se faire selon au moins trois modes d'application :
1) une application foliaire ; laquelle nécessite une couverture foliaire minutieuse et est difficile pour de grands arbres. Une possible dérive aérienne cause un mauvais rendement et nécessite une quantité augmentée de substance phytosanitaire et crée de plus un risque de pollution aérienne et/ou sur des plantes voisines.
2) une application au sol ; laquelle du fait de la diffusion dans les sols, nécessite une quantité augmentée de substance, même si moindre que dans le cas de l'application foliaire. Ce mode crée de plus un risque de pollution des sols.
3) une application par injection, dans laquelle la substance est introduite directement dans la plante de manière sous-corticale (sous l'écorce) au plus près du xylème, le système vasculaire de la sève ascendante assure alors un transport de la substance vers les organes ciblés allant du tronc en passant par les feuilles et les éventuels fruits. Ce mode d'administration permet de réduire drastiquement la quantité de substance nécessaire. La substance n'est jamais en contact avec l'environnement extérieur, ce qui limite les risques de pollution.

Si l'injection apparaît comme une solution particulièrement intéressante, elle n'en présente pas moins différents inconvénients.

Ainsi, l'accès au xylème s'effectue le plus souvent au moyen d'un perçage réalisé au moyen d'un foret. Il résulte d'un tel perçage, un trou de grande taille et un échauffement localisé ; lesquels augmentent le risque de diffusion du pathogène (insecte, champignon, bactérie, etc.). Pour pallier à ce risque, il est préférable d'opter pour une opération supplémentaire de bouchage/pansement.

Pour solutionner cette difficulté, il est connu des demandes de brevet Français FR 3052634 A1 et FR 3052635 A1 un dispositif d'injection sous-corticale comprenant un corps, une aiguille sensiblement rectiligne percée d'un canal, un premier actionneur apte à mobiliser l'aiguille selon une direction centrifuge de telle manière à permettre son introduction dans la plante et un injecteur apte à injecter la substance au travers de l'aiguille via le canal.

Si ce dispositif a offert une grande satisfaction, il n'en reste pas moins que son utilisation à grande échelle est délicat. En effet, l'utilisation régulière de celui-ci a montré que les efforts d'insertion de l'aiguille et d'injection sont extrêmement variables d'un arbre à l'autre, ce qui conduit à de multiples ratés.

L'opérateur ressentira des variations dans la force d'insertion et pourra parfois, selon son expérience, arriver à prédire avec plus ou moins de certitudes le succès de l'injection qui suit.

De façon similaire, l'opérateur pourra ressentir, pendant la phase d'injection, des retours d'efforts variables et prédire si le trou d'injection se trouve dans une partie en bois propice ou non à l'injection.

Maintenant, l'opérateur ne fait que subir ces variations et n'est pas à même d'ajuster l'injection.

Finalement, plus d'une injection sur deux ne se déroule pas de manière satisfaisante. Aussi, il n'existe aujourd'hui aucun appareil permettant de réaliser une injection de manière industrielle : rapide, précise, répétable, etc.

### Sommaire de l'invention

Les inventeurs ont maintenant réussi à développer un appareil pour l'injection sous-corticale d'une substance dans une plante qui remédie à ces inconvénients et qui permet à l'opérateur de s'adapter à cette variabilité de sorte d'obtenir une injection adaptée quelle que soit la situation.

Ainsi, l'invention a pour objet un appareil pour l'injection sous-corticale d'une substance dans une plante qui comprend :
- un corps (1),
- une aiguille (3) sensiblement rectiligne et percée en son centre d'un canal (4) débouchant par au moins un trou (2) sur la paroi latérale (c'est-à-dire la périphérie) de l'aiguille (3) et donc pas à l'extrémité de celle-ci destinée à pénétrer dans la plante ;
- un réservoir (5) communiquant avec l'aiguille (3) et renfermant la substance à injecter.
- un premier actionneur (6) apte à mobiliser l'aiguille (3) selon l'axe (AA) de l'aiguille (3) et selon une direction centrifuge (DF) de manière à permettre son insertion dans la plante,
- un deuxième actionneur (7) apte à comprimer le volume de substance présent dans le réservoir (5) de sorte à permettre l'injection de cette substance au travers de l'aiguille (3) jusqu'à la plante via le canal (4),
***caractérisé en ce qu'il*** comprend encore :
- un premier capteur d'effort (8) associé au corps (2), lequel permet de mesurer l'effort d'appui de l'appareil sur la plante
- un deuxième capteur d'effort (9) associé au premier actionneur (6), lequel permet de mesurer l'effort d'insertion de l'aiguille (3) dans la plante suite à la mobilisation de cette dernière par le premier actionneur (6) ;
- un troisième capteur d'effort (10) qui permet de mesurer l'effort de mise en pression du volume de substance présent dans le réservoir (5) ; et
- au moins un microcontrôleur :
   1- qui ne permet l'activation du premier actionneur (6) que si le premier capteur d'effort (8) détecte un effort d'appui ;
   2- qui module ensuite l'activation du premier actionneur (6), et donc l'insertion de l'aiguille (3) dans la plante, en fonction de l'effort d'insertion mesuré par le deuxième capteur d'effort (9) ; et, simultanément ou après que l'insertion ait été effectuée ;
   3- qui module la compression du volume de substance présent dans le réservoir (5), et donc l'injection de cette substance dans la plante, en fonction de l'effort mesuré par le troisième capteur d'effort (10).

L'invention concerne également un procédé de traitement d'une plante par injection sous-corticale d'une substance au moyen d'un tel appareil.

L'invention concerne enfin l'utilisation d'un tel appareil pour l'injection sous-corticale dans une plante, de préférence pour le traitement d'une plante par l'injection sous-corticale d'une substance phytosanitaire.

### Descriptif des dessins

- la figure 1 montre une représentation schématique d'un mode de réalisation préférentiel d'un appareil selon l'invention.
- la figure 2 et suivante représente un mode de réalisation préféré de l'organigramme d'un appareil selon l'invention.
- la figure 3 montre un exemple d'écran identifiant un tronc d'arbre à injecter, l'orientation Nord/Sud est indiquée, de même que la position de l'appareil et des points d'insertion.
- la figure 4 montre un schéma détaillant la corrélation entre les variations d'efforts et la structure de la plante injectée.

### Description détaillée de l'invention :

La substance à injecter peut-être de plusieurs types et appartenir à la famille des biocides (ex. insecticides, antibiotiques, antifongiques, et/ou antiparasitaires), des nutriments ou encore des régulateurs de croissance ou encore des stimulateurs de défense des plantes. Maintenant, et du fait de la destination de l'appareil selon l'invention, la substance à injecter sera plutôt une substance phytosanitaire.

Pour ce qui est de l'appareil en tant que tel, celui-ci peut alternativement prendre la forme d'un appareil portatif ou non.

Dans sa version non portative, l'appareil pourra être adapté sur une machine (tracteur ou autre) et il comprendra alors des interfaces mécaniques, électroniques et/ou électriques de sorte de permettre l'asservissement du fonctionnement de l'appareil à celui de la machine.

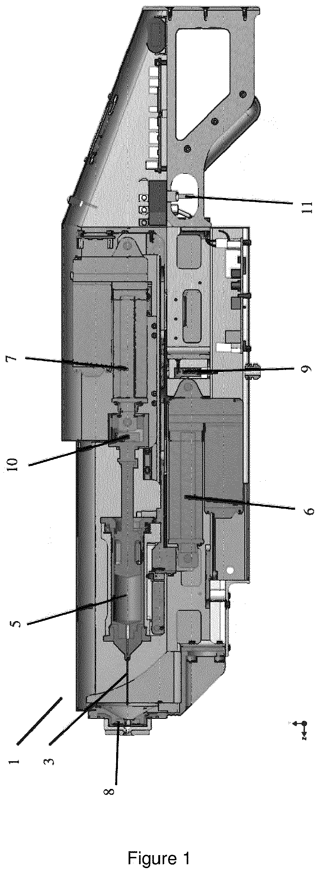

Maintenant, on préfèrera un appareil portatif, dont l'ergonomie sera alors pensée pour faciliter sa prise en main par l'opérateur. Un tel appareil portatif est représenté à la figure 1.

Ainsi, l'appareil comprendra alors au moins un moyen de préhension et de guidage, comme une ou deux poignées, lequel moyen de préhension et de guidage facilitera grandement la prise en main par l'opérateur. L'appareil pourra comprendre également au moins un moyen de portage, tel qu'un harnais ou, plus simplement, une sangle de sorte de ne pas compliquer la prise en main de l'appareil et surtout de ne pas fatiguer inutilement l'opérateur.

En ce qui concerne l'aiguille, on optera pour le meilleur compromis possible entre la facilité d'injection et le traumatisme le plus réduit possible à l'écorce de la plante. Typiquement, l'aiguille présentera un diamètre moyen compris entre 1 et 3 mm, de préférence allant de 1,5 à 2 mm.

Pour ce qui est de la longueur de l'aiguille, elle est comprise entre 2 et 20 cm, de préférence entre 2 et 10 cm et, de manière particulièrement préférée entre 2 et 5 cm. Pour ce qui est de sa forme, elle pourra présenter une forme cylindrique

Pour ce qui est du au moins un trou (2) présent sur la paroi latérale de l'aiguille et donc pas à l'extrémité de celle-ci destinée à pénétrer dans la plante, celui-ci pourra se positionner à moins d'un centimètre de cette extrémité, voir à moins de 5 millimètres de celle-ci.

Maintenant, l'aiguille pourra comprendre plusieurs trous distaux qui forment autant de sorties du canal et qui sont aptes à permettre la dispersion de la substance dans la plante.

Le réservoir (5) pourra être formé par le volume intérieur d'un contenant (ex. seringue) comprenant une première extrémité qui forme un embout coopérant avec l'embase de l'aiguille et une seconde extrémité opposée à la première et par laquelle est montée coulissant un piston mobile en translation par rapport à l'axe du contenant, lequel piston mobile est solidaire d'un poussoir. Ensemble, l'aiguille (3) et le contenant forment les pièces d'une cartouche d'injection qui pourra, après utilisation (injection), être renouvelée simplement en remplaçant le contenant utilisé par un nouveau contenant pré-rempli.

En lien avec le premier actionneur (6), lequel permet l'insertion de l'aiguille (3) dans la plante, celui-ci pourra prendre aussi bien la forme d'un vérin que d'un percuteur. A noter que ce même actionneur (6) pourra également permettre de retirer l'aiguille (3) de la plante après injection de la substance présente dans le réservoir.

Typiquement, ce premier actionneur (6) sera sous la dépendance d'un moyen d'activation (11), comme une gâchette, actionnable par l'opérateur. Ce moyen d'activation (11) permet de déclencher la séquence d'injection et il peut en outre constituer une sécurité de type homme mort. Dans ce cas, et dès lors qu'il n'est pas activé en permanence, il entraînera un arrêt de l'appareil.

En lien avec le second actionneur (7), lequel permet lui l'injection dans la plante de la substance à injecter, il prendra idéalement la forme d'un vérin. Avantageusement, le couplage du piston de la seringue, quand il existe, au second actionneur (7) permet en outre un mouvement en recul du piston de la seringue, de façon à supprimer la pression résiduelle en fin d'injection et ainsi éliminer la perte de substance dans l'environnement.

Les deux actionneurs peuvent être alimentés par toute source de puissance connue, notamment par une source de puissance électrique et/ou pneumatique, de préférence par une source électrique qui pourra alors prendre la forme d'une batterie, notamment d'un bloc d'accumulateurs échangeable et rechargeable. En fonction de la puissance et de l'autonomie souhaitée, la source de puissance pourra se trouver dans l'appareil ou non (ex. une source de puissance portée par l'opérateur).

En ce qui concerne maintenant les capteurs d'effort, le premier (8) d'entre eux, permettant de mesurer l'effort d'appui de l'appareil sur la plante, est positionné au niveau d'un point d'appui du corps (1) sur la plante et, idéalement, à proximité immédiate du point de sortie de l'aiguille (3) en vue de l'injection de la substance dans la plante.

Ce premier capteur d'effort (8) constitue une sécurité puisqu'il permet d'éviter la mise en route de l'injection par l'activation du premier actionneur (6) si ce premier capteur d'effort (8) n'indique pas de contact avec une surface d'appui ou s'il indique un effort d'appui insuffisant. Maintenant, ce même premier capteur d'effort (8) permet aussi d'interrompre l'injection s'il détecte une interruption de l'appui.

A noter que la détection ou non d'un effort d'appui peut correspondre à la détection ou non d'une valeur seuil d'effort d'appui, laquelle valeur seuil correspond à un effort d'appui d'au moins 10daN, de préférence d'au moins 5daN et, de manière particulièrement préférée d'au moins 2daN.

Durant la phase d'insertion de l'aiguille (3), sur la base des valeurs en provenance du premier capteur d'effort (8) et au moyen du microcontrôleur, l'opérateur pourra être informé de la qualité de son appui (ex. au moyen d'une jauge affichée sur un écran de l'appareil et/ou d'un affichage lumineux (ex. LED) qui peut être positionné à l'avant de l'appareil et/ou d'un signal sonore) de façon à pouvoir ajuster son geste lorsque son appui contre la plante devient insuffisant et menace de faire cesser la séquence d'injection.

Le deuxième capteur d'effort (9), associé au premier actionneur (6), permet de mesurer l'effort d'insertion de l'aiguille (3). Dans le cas où l'effort d'insertion est trop important, du fait d'une zone trop dure, il y a un risque d'endommager la plante, ou l'aiguille (3), voir même l'appareil. Dès lors, le microcontrôleur peut interrompre l'étape d'insertion pour préserver ces éléments, voir même déclencher le retrait de l'aiguille (3) de l'écorce de la plante. Dans le cas d'une insertion se déroulant sans incident, le capteur d'effort permet d'identifier des variations de l'effort d'insertion tout au long de la phase d'insertion de l'aiguille (3) dans l'écorce puis dans l'aubier. Ces variations résultent sont liées au passage d'aiguille (3) à travers les différentes structures (présentant des duretés distinctes) de l'écorce et du bois de la plante. Si l'effort d'insertion est constant lors de la traversée d'une structure, il varie en revanche à la frontière entre deux structures. Aussi, le suivi des variations de l'effort d'insertion l'aiguille (3) permettra de renseigner l'opérateur, et aussi l'appareil, sur la position de l'aiguille (3) au sein de la plante. Partant de là, il devient possible, en suivant cette variation de l'effort d'insertion d'identifier l'arrivée de l'aiguille, ou plus exactement du au moins un trou au sein de celle-ci, au niveau de la zone de la plante la plus adaptée pour effectuer l'injection (ex. arrivée au niveau du xylème ou à proximité de celui-ci). De la sorte, le microcontrôleur est à même d'interrompre la phase d'insertion de l'aiguille dès son arrivée au sein de la structure de la plante ciblée, de préférence le xylème, et aussi d'augmenter considérablement le succès de l'injection.

L'appareil selon l'invention peut également comprendre un premier capteur de position qui est associé au premier actionneur (6) et qui permet de renseigner l'opérateur, et potentiellement l'appareil (1), sur la longueur d'aiguille (3) introduite dans l'écorce de la plante.

Sur la base des informations fournies par le premier capteur de position, le microcontrôleur est à même d'interrompre la phase d'insertion de l'aiguille (3) dès lors que la longueur souhaitée d'aiguille (3) (ou une longueur maximale) a été introduite dans l'écorce de la plante.

Ainsi, en fonction de la plante à traiter, laquelle est renseignée par l'opérateur par exemple, il est ainsi possible de moduler la longueur d'aiguille introduite. Cet aspect est particulièrement intéressant sachant que l'épaisseur d'écorce peut varier considérablement d'une espèce de plante à une autre et d'un point d'injection à l'autre sur une même plante.

Le troisième capteur d'effort (10) permet de mesurer l'effort de mise en pression du volume de substance présent dans le réservoir (5). On pourra associer ce capteur au deuxième actionneur (7), par exemple en le positionnant entre le réservoir de substance (et le piston s'il est présent) et le deuxième actionneur (7) ou encore l'associer au réservoir (5) de substance de sorte de mesurer directement la mise en pression du volume de la substance présente dans celui-ci.

Dans le cas où l'effort de mise en pression est trop important, du fait, par exemple, d'une zone trop dure du bois où une injection pourrait endommager la plante, ou d'une obturation du trou de l'aiguille (3), il y a un risque d'endommager le réservoir (5), voir même l'appareil. Dans le cas où l'effort de mise en pression est trop faible du fait, par exemple, d'un endommagement de l'écorce de la plante, il y a un risque de réaliser une injection inefficace et, surtout, de disperser inutilement des produits phytosanitaires dans l'environnement extérieur. Dans ces deux cas, le microcontrôleur peut interrompre l'étape d'injection sur la base des informations transmises par le deuxième capteur d'effort (9) ou le troisième capteur d'effort (10).
Il est également possible d'envisager une mise en pression du réservoir (5) de substance, alors à une pression constante, au cours de l'étape d'insertion de l'aiguille (3) dans l'écorce de la plante. Dans ce cas, les deux actionneurs (6 et 7) sont activés simultanément par le microcontrôleur. Cette mise en pression « constante » du réservoir (5) de substance permet de renseigner l'opérateur, et potentiellement l'appareil (1) sur l'arrivée de l'aiguille (3) dans des zones de la plante propice à l'injection, puisque l'arrivée de l'aiguille (3) dans ces zones entraînera l'activation du deuxième actionneur (7) pour maintenir de la pression du réservoir (5) de substance constante. Partant de là, il devient possible, en suivant cette variation de l'effort de mise en pression, d'identifier l'arrivée de l'aiguille, ou plus exactement du au moins un trou au sein de celle-ci, au niveau de la zone de la plante la plus adaptée pour effectuer l'injection (ex. arrivée au niveau du xylème ou 1 à 3 cm plus profondément que celui-ci). De la sorte, le microcontrôleur est à même d'interrompre la phase d'insertion de l'aiguille (3) dès son arrivée au sein de la structure de la plante ciblée, de préférence le xylème ou après celui-ci, et aussi d'augmenter considérablement le succès de l'injection.
Avec une telle configuration, l'aiguille (3) est d'abord enfoncée de 1cm en dessous de l'écorce. A ce stade, le deuxième actionneur (7) met en pression le réservoir (5) de substance, par exemple à environ 10 bars qui constitue une pression dite de détection. Le premier actionneur (6) continue d'avancer alors que le second actionneur (7) est asservi au maintient de cette pression de détection, tout en mesurant le volume nécessaire au maintient de cette pression. Lorsqu'un pic de volume est détecté au cours de l'avancement de l'aiguille (3), ce pic est identifié comme étant un endroit propice à l'injection. La séquence d'insertion puis d'injection se termine alors à cet endroit.

L'appareil selon l'invention peut également comprendre un deuxième capteur de position qui est associé au deuxième actionneur (7) et qui permet de renseigner l'opérateur, et potentiellement l'appareil (1), sur le volume de substance introduit dans la plante. Sur la base des informations fournies par ce deuxième capteur de position, le microcontrôleur est à même d'interrompre la phase d'injection dès lors que le volume de substance souhaité a été injecté dans la plante, ou d'enregistrer le volume de substance introduit réellement dans le cas où l'injection a été interrompue pour une des raisons précitées.

En fonction de la plante à traiter, laquelle est renseignée par l'opérateur par exemple, il est ainsi possible de moduler le volume de substance injecté.

En lien avec le microcontrôleur, celui-ci comprend au moins un programme qui permet de réguler l'activation des actionneurs en fonction des valeurs d'effort mesurées par les capteurs d'effort.

Idéalement, l'appareil selon l'invention comprend en outre au moins un témoin de fonctionnement ou voyant de statut, lequel peut prendre la forme d'un voyant lumineux comme une LED, et dont la position sur l'appareil est telle que l'opérateur puisse le voir en toute situation. Ce témoin de fonctionnement ou voyant de statut (ex. vert) renseigne l'opérateur sur l'existence d'une phase insertion/injection en cours. Maintenant, à l'aide d'une autre couleur (ex. rouge), ce même témoin de fonctionnement ou voyant de statut peut renseigner l'opérateur sur l'existence d'une anomalie, par exemple un appui insuffisant par l'opérateur de l'appareil contre la plante.

L'appareil selon l'invention pourra également comprendre une ou plusieurs interfaces visuelles (ex. écran LCD, voyant(s) lumineux type LED) permettant à l'opérateur d'avoir un suivi visuel des paramètres/données de la séquence d'injection en cours. Maintenant, il pourra également comprendre une interface de configuration manuelle des paramètres de l'appareil, notamment un écran LCD tactile équipé de boutons de navigation.

Typiquement, l'appareil selon l'invention comprendra au moins un écran (ex. LCD 2,4 »), de préférence tactile, dont la position est idéalement à la base de l'appareil, à proximité du moyen d'activation de l'appareil et donc des mains de l'opérateur.

Un tel écran pourra par exemple afficher les différents paramètres en lien avec la substance présente dans le réservoir (5) (nom, lot, traitement visé, volume encore contenu, etc.) mais aussi des données permettant d'assister l'opérateur dans son injection (affichage de l'effort d'appui sur le tronc, affichage d'un cercle identifiant le tronc et les points d'injection à effectuer et ceux déjà faits, notamment les points ratés).

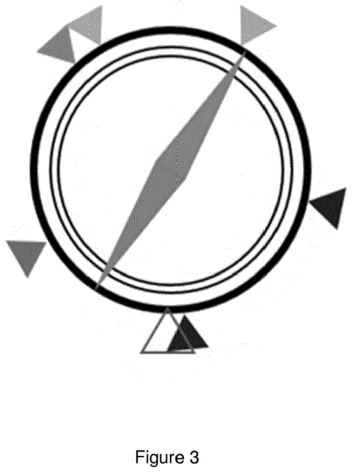

La figure 3 illustre un tel affichage où le cercle représente le tronc d'arbre à injecter, son orientation par rapport au Nord et au Sud est indiqué au moyen des aiguilles centrales. Le triangle vide identifie la position de l'appareil et les autres triangles pleins les sites d'insertion passés, présents et futurs (une couleur permet leur dissociation).

Un tel écran pourra également permettre à l'opérateur de saisir des données (indications de la campagne d'injection, indication de l'arbre, indication du diamètre ou de la circonférence du tronc) de sorte d'obtenir des instructions complétées (calcul du nombre de points d'injection à effectuer).

En outre, l'appareil selon l'invention comprendra également au moins un voyant lumineux, lequel permet de renseigner l'opérateur sur l'état de l'appareil (ex. arrêt, allumé, injection en cours, anomalie). Ce voyant doit rester visible de l'opérateur dans les positions dans lesquelles la lecture de l'écran peut être compromise. Typiquement, ce voyant lumineux sera positionné à l'extrémité avant de l'appareil selon l'invention là où l'opérateur focalise son attention durant la phase d'injection.

L'appareil pourra également comprendre un ou plusieurs capteurs internes permettant de préciser le statut d'un ou plusieurs composants de l'appareil (1), comme la température des actionneurs ou encore le niveau de charge de la batterie.

L'appareil selon l'invention pourra également comprendre un ou plusieurs capteurs d'environnement permettant de préciser le contexte de l'injection, comme la position géographique (site d'injection, position GPS), la position de l'azimut de l'axe longitudinal de l'appareil (direction d'injection) ou encore la température extérieure.

A titre de perfectionnement, l'appareil selon l'invention pourra encore comprendre une mémoire (électronique) contenant les paramètres de fonctionnement de l'appareil, mais également les paramètres à utiliser pour les différents types de cartouche (nombre de points d'injection selon le diamètre du tronc, volume visé à injecter, volume minimal pour une injection réussie, etc.) et, éventuellement, l'historique des injections réalisées par l'appareil comprenant les valeurs de l'ensemble des capteurs au cours de l'injection (campagne d'injection, date, lieu ou arbre, valeurs des capteurs d'effort et des paramètres moteur au cours du temps de l'injection, orientation de l'injection, température, météo, etc.).

L'invention concerne encore un procédé de traitement d'une plante par injection sous-corticale d'une substance, de préférence d'une substance phytosanitaire, au moyen d'un tel appareil.

En effet, l'appareil selon l'invention permet de concevoir des séquences d'injection élaborées où les informations des capteurs d'effort influent sur la séquence insertion/injection. La séquence est contrôlée par un programme du microcontrôleur, lequel programme régule l'activation des actionneurs en fonction des valeurs d'effort mesurées par les capteurs d'effort et de la séquence d'insertion/injection voulue.

Le procédé selon l'invention comprend les étapes de :
i) Positionnement, sur l'écorce de la plante de l'appareil de traitement tel que défini précédemment et passage à l'étape ii) sous le contrôle du premier capteur d'effort (8) ;
ii) insertion, par l'activation du premier l'actionneur (6), de l'aiguille (3) dans l'écorce de la plante sous le contrôle du deuxième capteur d'effort (9), et
iii) injection, sous l'écorce de la plante, de la substance par l'activation du second actionneur (7) sous le contrôle du troisième capteur d'effort (10).

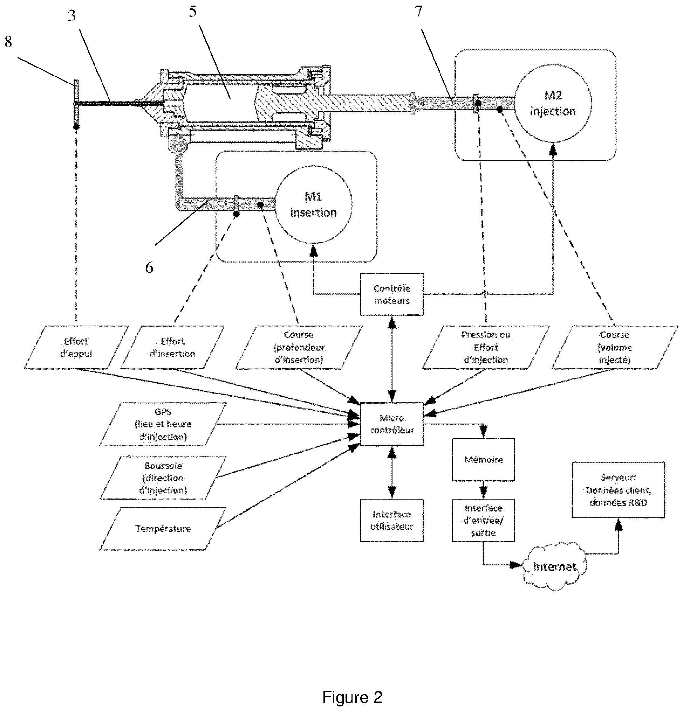

Un possible schéma de principe organisant les étapes du procédé est illustré à la figure 2.

Le premier capteur d'effort (8) contrôle le passage à l'étape ii) puisqu'en l'absence de détection d'un contact sur une surface d'appui par celui-ci ou en présence d'un effort d'appui insuffisant, le microcontrôleur empêche le passage à l'étape ii) d'injection par l'activation du premier actionneur (6).

De même, et suite à l'interruption de la détection d'un contact sur une surface d'appui par le premier capteur d'effort (8), le microcontrôleur (11) interrompt l'étape ii) d'insertion ou iii) d'injection, soit immédiatement, soit au bout d'un temps court permettant à l'opérateur de corriger la situation sans que l'injection ne soit annulée.

A noter que la détection ou non d'un d'appui par le premier capteur d'effort (8) peut correspondre à la détection d'une valeur d'effort seuil, laquelle valeur d'effort seuil est d'au moins 10daN, de préférence d'au moins 5daN et, de manière particulièrement préférée, d'au moins 2daN.

Le contrôle du deuxième capteur d'effort (9) sur l'étape ii) d'insertion de l'aiguille dans l'écorce de la plante permet de limiter les risques, que ce soit pour la plante injectée ou pour l'opérateur.

Dans le cas où l'effort d'insertion est trop important, auquel cas on peut dire que la zone d'insertion est trop dure et le risque de détérioration de la plante est alors important, le microcontrôleur interrompt l'étape d'insertion ii).

A titre d'exemple d'effort d'insertion trop important, on peut citer un effort supérieur à au moins 120 daN, de préférence à au moins 150daN.

De même, dans le cas où l'effort d'insertion est trop faible, auquel cas on peut dire que la zone d'insertion est inadaptée avec un risque de fuite et d'injection inefficace important, le microcontrôleur interrompt également l'étape d'insertion ii).

A titre d'exemple d'effort d'insertion trop faible, on peut citer un effort inférieur à au moins 10 daN, de préférence à au moins 5 daN.

Avantageusement, le microcontrôleur interrompt la phase d'insertion de l'aiguille (3) dès que la détection par le premier capteur de position de l'insertion de la longueur d'aiguille (3) souhaitée dans l'écorce de la plante.

Alternativement, le microcontrôleur interrompt la phase d'insertion de l'aiguille (3) dès la détection par le deuxième capteur d'effort (9) de son arrivée au sein d'une structure de la plante propice à l'injection.

En effet, le deuxième capteur d'effort (9) permet en détectant les zones de dureté successives au sein de l'écorce de la plante de déterminer la structure de cette même plante, notamment au niveau de l'extrémité de l'aiguille (3). Dès lors, il devient possible d'arrêter l'étape d'insertion ii) dès lors que l'extrémité de l'aiguille (3) a atteint le site d'injection le plus favorable correspondant soit à une valeur d'effort déterminée, soit à une position au sein d'une séquence de variation d'effort déterminée, comme par exemple la zone comprise entre deux pics de zones nécessitant un effort d'insertion plus important (l'entrée dans l'écorce n'étant pas comptabilisée comme première zone nécessitant un effort plus important).

Le contrôle du troisième capteur d'effort (9) sur l'étape iii) d'injection, sous l'écorce de la plante, de la substance par l'activation du second actionneur (7) permet de limiter les risques, que ce soit pour la plante injectée ou pour l'opérateur.

Dans le cas où l'effort d'injection est trop important, auquel cas on peut dire que le risque d'éclatement ou de fissuration de l'écorce de la plante est alors important et/ou que le risque d'éclatement et/ou de fuite du réservoir (5) de substance est trop important, le microcontrôleur interrompt l'étape d'injection iii).

A titre d'exemple d'effort d'injection trop important, on peut citer un effort supérieur à au moins 60 daN/cm2, de préférence à au moins 50 daN/cm2.

Selon un mode de réalisation préféré, les étapes ii) d'insertion de l'aiguille et iii) d'injection de la substance présente dans le réservoir sont successives.

Selon un autre mode de réalisation préféré, les étapes ii) d'insertion de l'aiguille et iii) d'injection de la substance présente dans le réservoir sont simultanées.

Dans ce cas de figure, le deuxième actionneur (7) peut être activé par le microcontrôleur de sorte d'obtenir une mise en pression « constante » du réservoir (5) de substance.

Dès lors, la mesure de la profondeur d'insertion de l'aiguille de même que du flux de liquide nécessaire au maintien de la pression constante permet de déterminer la structure de la plante au niveau de l'extrémité de l'aiguille (3), de sorte d'effectuer l'injection au site le plus favorable.

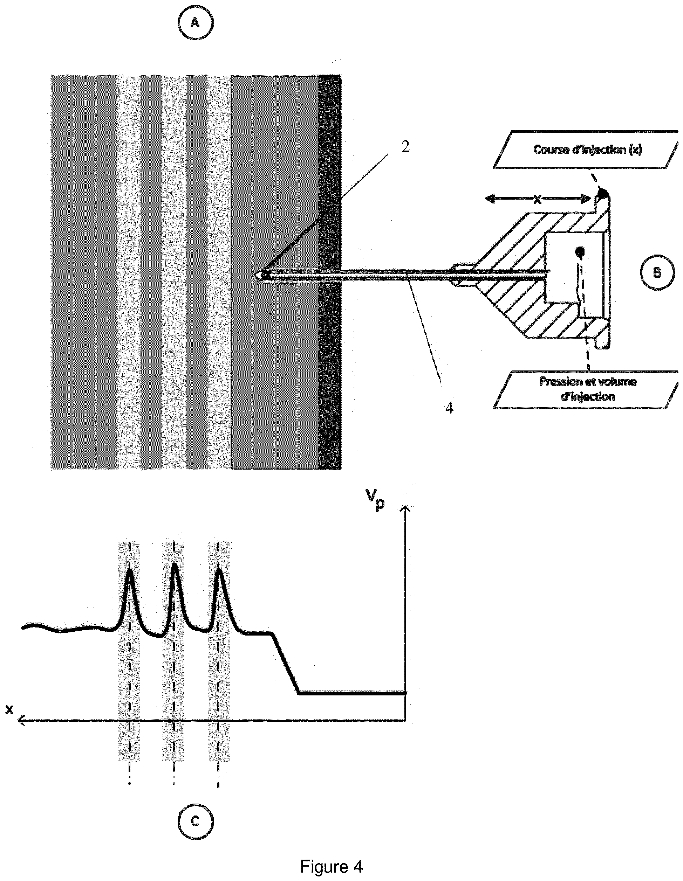

La figure 4 illustre comment, en partant de la structure d'une plante (A), l'insertion de l'aiguille (3) dans celle-ci (B) permet, grâce au troisième capteur d'effort (9) d'obtenir par la représentation des variations de volume à pression constante (P/V) en fonction de la course d'injection (x), une représentation schématique de cette structure.

Avantageusement, le procédé selon l'invention comprend en outre une étape iv) d'extraction de l'aiguille (3) par l'activation du premier actionneur (6).

Selon un mode de réalisation préféré, les étapes iii) d'injection de la substance présente dans le réservoir et iv) d'extraction de l'aiguille sont successives.

Selon un autre mode de réalisation préféré, les étapes iii) d'injection de la substance présente dans le réservoir et iv) d'extraction de l'aiguille sont simultanées.

Un tel mode de réalisation permet de réduire la pression nécessaire à l'injection puisque la substance occupe la cavité laissée par l'aiguille et peut être absorbée par la plante dans le temps.

L'invention concerne encore une utilisation d'un tel appareil pour le traitement d'une plante par injection sous-corticale d'une substance, de préférence d'une substance phytosanitaire.

## Revendications

1. Un appareil pour l'injection sous-corticale d'une substance dans une plante qui comprend :
• un corps ;
• une aiguille (3) sensiblement rectiligne et percée en son centre d'un canal (4) débouchant par au moins un trou (2) sur la paroi latérale de l'aiguille (3) et donc pas à l'extrémité de celle-ci destinée à pénétrer dans la plante ;
• un réservoir (5) communiquant avec l'aiguille (3) et renfermant la substance à injecter ;
• un premier actionneur (6) apte à mobiliser l'aiguille (3) selon l'axe (AA) de l'aiguille (3) et selon une direction centrifuge (DF) de manière à permettre son insertion dans la plante,
• un deuxième actionneur (7) apte à comprimer le volume de substance présent dans le réservoir (5) de sorte à permettre l'injection de cette substance au travers de l'aiguille (3) jusqu'à la plante via le canal (4) ;
***caractérisé en ce qu'il*** comprend encore :
• un premier capteur d'effort (8) associé au corps (2), lequel permet de mesurer l'effort d'appui de l'appareil sur la plante ;
• un deuxième capteur d'effort (9) associé au premier actionneur (6), lequel permet de mesurer l'effort d'insertion de l'aiguille (3) dans la plante suite à la mobilisation de cette dernière par le premier actionneur (6) ;
• un troisième capteur d'effort (10) qui permet de mesurer l'effort de mise en pression du volume de substance présent dans le réservoir (5) ; et
• au moins un microcontrôleur :
1- qui ne permet l'activation du premier actionneur (6) que si le premier capteur d'effort (8) détecte un effort d'appui ;
2- qui module ensuite l'activation du premier actionneur (6), et donc l'injection de l'aiguille (3) dans la plante, en fonction de l'effort d'insertion mesuré par le deuxième capteur d'effort (9) et, simultanément ou après que l'insertion ait été effectuée ;
3- qui module la compression du volume de substance présent dans le réservoir (5), et donc de l'injection de cette substance dans la plante, en fonction de l'effort mesuré par le troisième capteur d'effort (10)

2. L'appareil selon la revendication 1, **caractérisé en ce que** le premier actionneur (6) permet également de retirer l'aiguille de la plante après injection de la substance présente dans le réservoir (5)

3. L'appareil selon l'une quelconque des revendications 1 ou 2, **caractérisé en ce que** le premier capteur d'effort (8) est positionné au niveau d'un point d'appui du corps (1) sur la plante et, de préférence à proximité immédiate du point de sortie de l'aiguille (3) en vue de l'injection de la substance dans la plante

4. L'appareil selon l'une quelconque des 1 à 3, **caractérisé en ce qu'il** comprend en outre :
∘ un ou plusieurs capteurs d'environnement permettant de préciser le contexte de l'injection, comme la position géographique, la position de l'azimut de l'axe longitudinal de l'appareil ou encore la température extérieure ; et/ou
o une mémoire contenant les paramètres de fonctionnement de l'appareil, mais également les paramètres à utiliser pour les différents types de cartouche et, éventuellement, l'historique des injections réalisées par l'appareil

5. Un procédé de traitement d'une plante par injection sous-corticale d'une substance, de préférence phytosanitaire, comprenant les étapes de :
i) Positionnement, sur l'écorce de la plante, d'un appareil tel que défini à l'une quelconque des revendications 1 à 4, et passage à l'étape ii) sous le contrôle du premier capteur d'effort (8) ;
ii) Insertion, par l'activation du premier l'actionneur (6), de l'aiguille (3) dans l'écorce de la plante sous le contrôle du deuxième capteur d'effort (9) ; et
iii) Injection, sous l'écorce de la plante, de la substance par l'activation du second actionneur (7) sous le contrôle du troisième capteur d'effort (10).

6. Le procédé de traitement d'une plante par injection sous-corticale d'une substance selon la revendication 5, **caractérisé en ce qu'il** comprend en outre une étape iv) d'extraction de l'aiguille (3) par l'activation du premier actionneur (6).

7. Le procédé de traitement d'une plante par injection sous-corticale d'une substance selon la revendication 5 ou 6, **caractérisé en ce que** les étapes ii) d'insertion de l'aiguille et iii) d'injection de la substance présente dans le réservoir sont successives.

8. Le procédé de traitement d'une plante par injection sous-corticale d'une substance selon la revendication 5 ou 6, **caractérisé en ce que** les étapes ii) d'insertion de l'aiguille et iii) d'injection de la substance présente dans le réservoir sont simultanées.

9. Le procédé de traitement d'une plante par injection sous-corticale d'une substance selon l'une quelconque des revendications 5 à 8, **caractérisé en ce que** l'étape ii) d'insertion de l'aiguille (3) est interrompue par le microcontrôleur lorsque l'effort d'insertion est :
• supérieur à au moins 150 daN ou
• inférieur à au moins 10 daN.

10. Le procédé de traitement d'une plante par injection sous-corticale d'une substance selon la revendication 8, **caractérisé en ce que** le deuxième actionneur (7) est activé par le microcontrôleur de sorte d'obtenir une mise en pression « constante » du réservoir (5) de substance et lors de l'étape i) d'insertion, l'arrivée de l'aiguille (3) dans une zone propice à l'injection entraîne l'activation du deuxième actionneur (7) qui, pour maintenir la pression du réservoir (5) de substance constante, termine l'étape iii) d'injection la substance au sein de la plante.

11. Le procédé de traitement d'une plante par injection sous-corticale d'une substance selon l'une quelconque des revendications 6 à 7, **caractérisé en ce que** les étapes iii) d'injection de la substance présente dans le réservoir et iv) d'extraction de l'aiguille sont simultanées.

12. Utilisation d'un appareil (1) tel que défini à l'une quelconque des revendications 1 à 4, pour le traitement d'une plante par injection sous-corticale d'une substance, de préférence d'une substance phytosanitaire.

## Patentansprüche

1. Gerät zur subkortikalen Injektion einer Substanz in eine Pflanze, umfassend:
• einen Körper,
• eine im Wesentlichen gerade Nadel (3), die zentral mit einem Kanal (4) durchbohrt ist, der durch mindestens ein Loch (2) auf der Seitenwand der Nadel (3) ausmündet und also nicht an deren Ende, das dazu bestimmt ist, in die Pflanze einzudringen,
• einen Vorratsbehälter (5) in Verbindung mit der Nadel (3), der die zu injizierende Substanz enthält,
• ein erstes Betätigungsglied (6), geeignet, die Nadel (3) in Richtung der Achse (AA) der Nadel (3) und in einer Zentrifugalrichtung (DF) zu bewegen, derart zu erlauben, sie in die Pflanze einzuführen,
• ein zweites Betätigungsglied (7), geeignet, das Volumen der im Vorratsbehälter (5) befindlichen Substanz zu komprimieren, um die Injektion dieser Substanz über den Kanal (4) durch die Nadel (3) hindurch bis in die Pflanze zu erlauben,
**dadurch gekennzeichnet, dass** es außerdem umfasst:
• einen mit dem Körper (2) verbundenen Kraftsensor (8), der die Kraft zu messen erlaubt, mit der das Gerät auf die Pflanze drückt,
• einen zweiten, mit dem ersten Betätigungsglied (6) verbundenen Kraftsensor (9), der die Kraft zu messen erlaubt, mit der die Nadel (3) infolge ihrer Bewegung durch das erste Betätigungsglied (6) in die Pflanze eingeführt wird,
• einen dritten Kraftsensor (10), der die Kraft zu messen erlaubt, mit der das Volumen der im Vorratsbehälter (5) befindlichen Substanz unter Druck gesetzt wird, und
• mindestens ein Mikrosteuergerät
1- das die Betätigung des ersten Betätigungsgliedes (6) nur erlaubt, wenn der erste Kraftsensor (8) eine Druckkraft feststellt,
2- das dann die Betätigung des ersten Betätigungsgliedes (6) und also die Einführung der Nadel (3) in die Pflanze in Abhängigkeit von der Einführkraft reguliert, die vom zweiten Kraftsensor (9) gemessen wurde, und gleichzeitig oder nachdem die Einführung erfolgt ist:
3- das die Kompression des Volumens der im Vorratsbehälter (5) befindlichen Substanz und also die Injektion dieser Substanz in die Pflanze in Abhängigkeit von der Kraft reguliert, die vom dritten Kraftsensor (10) gemessen wurde.

2. Gerät nach Patentanspruch 1, **dadurch gekennzeichnet, dass** das erste Betätigungsglied (6) auch erlaubt, die Nadel nach Injektion der im Vorratsbehälter (5) befindlichen Substanz zurückzuziehen.

3. Gerät nach irgendeinem der Patentansprüche 1 oder 2, **dadurch gekennzeichnet, dass** der erste Kraftsensor (8) an einem Andrückpunkt des Körpers (1) auf der Pflanze angeordnet ist und vorzugsweise in unmittelbarer Nähe des Punktes des Austritts der Nadel (3) zur Injektion der Substanz in die Pflanze.

4. Gerät nach irgendeinem der Patentansprüche 1 bis 3, **dadurch gekennzeichnet, dass** es außerdem umfasst:
• einen oder mehrere Umgebungssensoren, die erlauben, den Kontext der Injektion, wie etwa die geographische Position, die Azimut-Stellung der Längsachse des Gerätes oder auch die Außentemperatur zu präzisieren, und/oder
• einen Speicher, der Arbeitsparameter des Gerätes enthält, aber auch Parameter, die für verschiedene Kartuschenarten anzuwenden sind und gegebenenfalls die Liste der bereits vom Gerät ausgeführten Injektionen.

5. Verfahren zur Behandlung einer Pflanze durch subkortikale Injektion einer Substanz, vorzugsweise eines Pflanzenschutzmittels, in eine Pflanze, die folgenden Schritte umfassend:
i) Anordnung eines Gerätes nach irgendeinem der Patentansprüche 1 bis 4, auf der Rinde der Pflanze und Übergang zum Schritt ii) unter Kontrolle des ersten Kraftsensors (8).
ii) Einführen der Nadel (3) durch Betätigung des ersten Betätigungsmittels (6) in die Rinde der Pflanze unter Kontrolle des zweiten Kraftsensors (9), und
iii) Injektion der Substanz unter die Rinde der Pflanze durch Betätigung des zweiten Betätigungsmittels (7) unter Kontrolle des dritten Kraftsensors (10).

6. Verfahren zur Behandlung einer Pflanze durch subkortikale Injektion einer Substanz nach Patentanspruch 5, **dadurch gekennzeichnet, dass** es außerdem einen Schritt iv) des Zurückziehens der Nadel (3) durch Betätigung des ersten Betätigungsmittels (6) umfasst.

7. Verfahren zur Behandlung einer Pflanze durch subkortikale Injektion einer Substanz nach Patentanspruch 5 oder 6, **dadurch gekennzeichnet, dass** die Schritte ii) des Einführens der Nadel und iii) der Injektion der im Vorratsbehälter (5) befindlichen Substanz nacheinander erfolgen.

8. Verfahren zur Behandlung einer Pflanze durch subkortikale Injektion einer Substanz nach Patentanspruch 5 oder 6, **dadurch gekennzeichnet, dass** die Schritte ii) des Einführens der Nadel und iii) der Injektion der im Vorratsbehälter (5) befindlichen Substanz gleichzeitig erfolgen.

9. Verfahren zur Behandlung einer Pflanze durch subkortikale Injektion einer Substanz nach irgendeinem der Patentansprüche 5 bis 8, **dadurch gekennzeichnet, dass** der Schritte ii) des Einführens der Nadel (3) durch das Mikrosteuergerät unterbrochen wird, wenn die Einführkraft
• größer ist, als mindestens 150 daN oder
• kleiner ist, als mindestens 10 daN.

10. Verfahren zur Behandlung einer Pflanze durch subkortikale Injektion einer Substanz nach Patentanspruch 8, **dadurch gekennzeichnet, dass** das zweite Betätigungsmittel (7) vom Mikrosteuergerät derart betätigt wird, dass der Vorratsbehälter (5) unter "konstantem" Druck gehalten wird und im Einführschritt i) die Ankunft der Nadel (3) in einer zur Injektion geeigneten Zone die Betätigung des zweiten Betätigungsmittels (7) zur Folge hat, der zur Konstanterhaltung des Druckes im Vorratsbehälter (5) der Substanz den Schritt iii) der Injektion der Substanz ins Innere der Pflanze beendet.

11. Verfahren zur Behandlung einer Pflanze durch subkortikale Injektion einer Substanz nach irgendeinem der Patentansprüche 6 bis 7, **dadurch gekennzeichnet, dass** die Schritte iii) der Injektion der im Vorratsbehälter (5) befindlichen Substanz und iv) des Zurückziehens der Nadel gleichzeitig erfolgen.

12. Gebrauch eines Gerätes (1) nach irgendeinem der Patentansprüche 1 bis 4 zur Behandlung einer Pflanze durch subkortikale Injektion einer Substanz, vorzugsweise eines Pflanzenschutzmittels.

## Claims

1. An apparatus for subcortical injection of a substance into a plant which comprises:
• a body ;
• a substantially rectilinear needle (3) pierced at its center by a channel (4) opening out through at least one hole (2) on the side wall of the needle (3) and therefore not at the end thereof intended to penetrate the plant;
• a reservoir (5) communicating with the needle (3) and containing the substance to be injected ;
• a first actuator (6) capable of moving the needle (3) along the axis (AA) of the needle (3) and in a centrifugal direction (DF) so as to allow it to be inserted into the plant ;
• a second actuator (7) capable of compressing the volume of substance in the reservoir (5) so as to allow this substance to be injected through the needle (3) to the plant via the channel (4);
***characterized in that it*** further comprises:
• a first force sensor (8) associated with the body (2), which allows the bearing force of the apparatus on the plant to be measured;
• a second force sensor (9) associated with the first actuator (6), which allows the force of insertion of the needle (3) into the plant to be measured following the mobilization thereof by the first actuator (6);
• a third force sensor (10), which allows the pressurization force of the volume of substance in the reservoir (5) to be measured; and
• at least one microcontroller:
1- which allows the activation of the first actuator (6) only if the first force sensor (8) detects a bearing force;
2- which then modulates the activation of the first actuator (6), and therefore the injection of the needle (3) into the plant, depending on the insertion force measured by the second force sensor (9) and, simultaneously with or after the insertion has been carried out;
3- which modulates the compression of the volume of substance in the reservoir (5), and therefore the injection of this substance into the plant, depending on the force measured by the third force sensor (10).

2. The apparatus according to claim 1, **characterized in that** the first actuator (6) also allows the needle to be removed from the plant after injection of the substance in the reservoir (5).

3. The apparatus according to any one of claims 1 or 2, **characterized in that** the first force sensor (8) is positioned at a point at which the body (1) bears on the plant and, preferably in the immediate vicinity of the exit point of the needle (3) for the purpose of injecting the substance into the plant.

4. The apparatus according to any one of 1 to 3, **characterized in that** it further comprises:
□ one or more environmental sensors allowing the context of the injection to be specified, such as the geographical position, the position of the azimuth of the longitudinal axis of the apparatus or the outside temperature; and/or
□ a memory containing the operating parameters of the apparatus, but also the parameters to be used for the different types of cartridge and, possibly, the history of the injections carried out by the apparatus.

5. A method of treating a plant by subcortical injection of a substance, preferably a phytosanitary substance, comprising the steps of:
i) Positioning, on the bark of the plant, an apparatus as defined in any one of claims 1 to 4, and transitioning to step ii) under the control of the first force sensor (8);
ii) Inserting, by activation of the first actuator (6), the needle (3) into the bark of the plant under the control of the second force sensor (9); and
iii) Injecting, under the bark of the plant, the substance by activation of the second actuator (7) under the control of the third force sensor (10).

6. The method of treating a plant by subcortical injection of a substance according to claim 5, **characterized in that** it further comprises a step iv) of extracting the needle (3) by activation of the first actuator (6).

7. The method of treating a plant by subcortical injection of a substance according to claim 5 or 6, **characterized in that** the steps of ii) inserting the needle and iii) injecting the substance in the reservoir are successive.

8. The method of treating a plant by subcortical injection of a substance according to claim 5 or 6, **characterized in that** the steps of ii) inserting the needle and iii) injecting the substance in the reservoir are simultaneous.

9. The method of treating a plant by subcortical injection of a substance according to any one of claims 5 to 8, **characterized in that** the step of ii) inserting the needle (3) is interrupted by the microcontroller when the insertion force is:
• greater than at least 150 daN or
• lower than at least 10 daN.

10. The method of treating a plant by subcortical injection of a substance according to claim 8, **characterized in that** the second actuator (7) is activated by the microcontroller so as to obtain a "constant" pressurization of the substance reservoir (5), and during the insertion step i), the arrival of the needle (3) in a zone suitable for injection leads to the activation of the second actuator (7) which, in order to maintain the pressure of the substance reservoir (5) constant, completes the step iii) of injecting the substance into the plant.

11. The method of treating a plant by subcortical injection of a substance according to any one of claims 6 to 7, **characterized in that** the steps iii) of injecting the substance in the reservoir and iv) of extracting of the needle are simultaneous.

12. A use of an apparatus (1) as defined in any of claims **Erreur ! Source du renvoi introuvable.** to 4, for the treatment of a plant by subcortical injection of a substance, preferably a phytosanitary substance.
